(19) Europäisches Patentamt / European Patent Office / Office européen des brevets

(11) **EP 2 981 807 B1**

(12) **FASCICULE DE BREVET EUROPEEN**

(45) Date de publication et mention
de la délivrance du brevet:
**12.04.2017 Bulletin 2017/15**

(21) Numéro de dépôt: **14717081.5**

(22) Date de dépôt: **26.03.2014**

(51) Int Cl.:
***G01N 21/47*** *(2006.01)* ***G02B 5/18*** *(2006.01)*
***G06F 17/16*** *(2006.01)* ***G06T 7/00*** *(2017.01)*
***G01N 21/956*** *(2006.01)* ***G06T 7/40*** *(2017.01)*
***G02B 1/00*** *(2006.01)*

(86) Numéro de dépôt international:
**PCT/IB2014/060164**

(87) Numéro de publication internationale:
**WO 2014/162241 (09.10.2014 Gazette 2014/41)**

(54) **PROCEDE OPTIQUE DE CARACTERISATION D'UNE SURFACE DIFFRACTANTE ET APPAREIL POUR LA MISE EN ŒUVRE D'UN TEL PROCEDE**

OPTISCHES VERFAHREN ZUR CHARAKTERISIERUNG EINER LICHTBRECHENDEN OBERFLÄCHE UND VORRICHTUNG ZUR DURCHFÜHRUNG SOLCH EINES VERFAHRENS

OPTICAL METHOD FOR CHARACTERISING A DIFFRACTIVE SURFACE AND APPARATUS FOR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2013 FR 1353075**

(43) Date de publication de la demande:
**10.02.2016 Bulletin 2016/06**

(73) Titulaire: **Commissariat à l'Énergie Atomique et aux Énergies Alternatives 75015 Paris (FR)**

(72) Inventeurs:
• **DELLEA, Olivier**
**F-42350 La Talaudiere (FR)**
• **DESAGE, Simon-Frédéric**
**F-42400 Saint-chamond (FR)**
• **FUGIER, Pascal**
**F-38190 Bernin (FR)**

(74) Mandataire: **Gevers & Orès**
**41 avenue de Friedland**
**75008 Paris (FR)**

(56) Documents cités:
**JP-A- 2004 286 483     US-A- 5 576 543**

**Description**

L'invention porte sur un procédé optique de caractérisation d'une surface diffractante présentant une structure en grains, ainsi que sur un appareil de mise en oeuvre de ce procédé et sur une tête optique dudit appareil. L'invention s'applique en particulier à la caractérisation et au suivi de la fabrication d'assemblages de particules de dimensions nanométriques ou micrométriques sur un substrat.

L'ordonnancement de particules colloïdales en assemblage compact comporte une grande variété d'applications : cristaux photoniques, capteurs SERS (diffusion Raman amplifiée par une surface), capteurs biologiques, etc.

A présent, l'ordonnancement des structures diffractantes, telles que les assemblages compacts de particules colloïdales, peut être mesuré seulement à l'aide de techniques microscopiques, de type optique ou utilisant un microscope électronique à balayage. Ces techniques ne conviennent pas à la caractérisation de structures présentant des surfaces importantes (plusieurs centimètres carrés ou plus).

Le brevet américain US 5 576 543 a trait à la détermination des caractéristiques cristallographiques d'un matériau en utilisant une technique de microscopie en champ sombre.

Le déposant a développé un procédé permettant de réaliser le transfert de films compacts de particules micro ou nanométriques sur des substrats flexibles ou rigides. Un tel procédé est décrit par le document WO2012113745 et illustré par la figure 1, sur laquelle on peut identifier :

- Un système SD permettant la dispense des particules NP, dispersées dans un liquide pour former une suspension SC ;
- Un convoyeur liquide CL, constitué par un écoulement d'un liquide « porteur », qui peut être différent de celui dans lequel les particules NP sont dispersées, pour transporter et agencer les particules afin de former un film compact FP. Ce convoyeur liquide s'écoule sur un plan incliné puis dans une zone horizontale appelée zone de transfert ZT.
- Un substrat flexible SF mis en mouvement par un convoyeur où doit être transféré le film compact de particules. La liaison entre le liquide porteur et le substrat est assurée par un pont capillaire PC.

Le procédé consiste donc à dispenser les particules à la surface du liquide porteur. Le liquide porteur véhicule les particules jusqu'à la zone de transfert. Les particules s'accumulent dans la zone de transfert, puis également dans la partie inférieure du pian incliné. Les particules présentes sur le plan incliné exercent alors une pression qui aide à l'ordonnancement des particules présentes dans la zone de transfert. Une variante du procédé permet l'utilisation d'un substrat rigide.

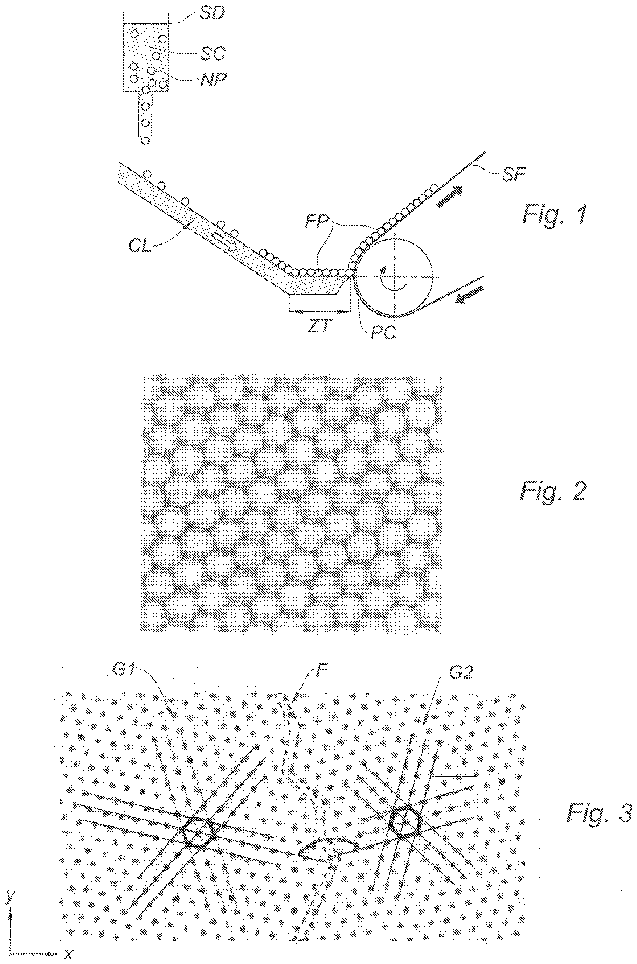

La figure 2 montre une microphotographie d'un film de microsphères de silice (diamètre : 1,1 $\mu$m) déposées sur un substrat en silicium. On peut observer que les particules s'organisent dans une configuration hexagonale compacte où chaque particule est entourée de 6 voisines dont les centres forment un hexagone.

En pratique, les films de particules réalisés sont formés de « grains » qui comportent des particules formant un réseau régulier à maille hexagonale dont l'orientation dans le plan est spécifique. Les grains se différencient entre eux par l'orientation de la maille élémentaire de leur réseau. La dimension des grains peut varier entre quelques $\mu m^2$ (micromètres carrés) jusqu'à 1 $cm^2$ (centimètre carré) ou plus ; elle dépend de la dispersion en taille des particules et des paramètres du procédé (pression de surface, vitesse de tirage, activation des particules...). La figure 3 montre deux grains G1 et G2, séparés par une fracture F. Il convient de noter, en outre, que les grains ne présentent pas nécessairement une structure parfaitement périodique, mais sont caractérisés par un degré d'ordonnancement variable, qui peut être exprimé par un nombre compris entre 0 (agencement complètement irrégulier, amorphe) et 1 (agencement parfaitement périodique ou « cristallin »).

Lorsque les particules constituant un tel film présentent des dimensions appropriées (dans le cas de particules sphériques de silice sur un convoyeur liquide formé par de l'eau, un diamètre compris entre 500 nm et 2,5 $\mu$m environ), on peut observer des effets de diffraction de la lumière. La structure en grains du film se traduit alors par une iridescence selon un motif aléatoire.

L'invention vise à procurer un procédé permettant de caractériser un film compact de particules micro ou nanométriques - ou plus généralement une surface diffractante - en mettant en évidence sa structure (liée à la forme des grains), sa texture (liée à l'orientation de la maille élémentaire de chaque grain) et/ou son taux d'ordonnancement. Le taux d'ordonnancement est défini comme le rapport entre la surface des régions présentant une orientation voulue et la surface totale observée. Un procédé selon la présente invention constitue une alternative à celui décrit dans la Demande de brevet en France 13/51870 déposée le premier mars 2013.

Conformément à l'invention, un tel but est atteint par un procédé de caractérisation d'une surface diffractante présentant une structure en grains « cristallins », comportant les étapes consistant à :

a) éclairer successivement ladite surface avec N>1 faisceaux lumineux ayant des directions de propagation inclinées d'un même angle $\theta_i$ par rapport à la normale à la surface et dont les projections sur la surface forment des angles azimutaux $\varphi_i^j$ différents par rapport une direction de référence ;

b) acquérir une image de ladite surface en correspondance de chaque dit faisceau lumineux suivant une même direction d'acquisition ; et

c) traiter numériquement lesdites images pour obtenir au moins une information sur au moins une propriété de ladite surface choisie parme : sa structure de grains, sa texture et son taux d'ordonnancement ;

caractérisé en ce que ladite étape c comprend la détermination, pour chaque point de ladite surface correspondant à un pixel desdites images, d'un angle azimutal moyen d'une plage d'angles azimutaux $\varphi_i^j$ pour lesquels ledit point apparait brillant lorsqu'il est observé suivant ladite direction d'acquisition.

Selon différents modes de réalisation de ce procédé :

- Ladite étape c) peut comprendre, pour chaque point de ladite surface correspondant à un pixel desdites images, les sous-étapes consistant à:

  c1) construire un vecteur binaire à N éléments, associés chacun à un dit faisceau lumineux, chaque élément de ce vecteur étant représentatif de l'intensité lumineuse dudit pixel lorsque la surface est éclairée par le faisceau lumineux correspondant, l'élément prenant une première valeur binaire si ladite intensité est inférieure à un seuil et une deuxième valeur binaire si elle est supérieure audit seuil ; et

  c2) déterminer ledit angle azimutal moyen à partir dudit vecteur.

- Ladite sous-étape c2) peut comprendre l'identification, dans ledit vecteur, d'un bloc d'éléments contigus présentant ladite deuxième valeur binaire et la détermination d'un élément central dudit bloc, ledit angle azimutal moyen étant celui du faisceau lumineux associé audit élément central.

- Chaque dit grain peut présenter une périodicité bidimensionnelle avec symétrie hexagonale et dans lequel lesdits angles azimutaux $\varphi_i^j$ sont donnés par : $\varphi_i^j=\varphi_0+j\cdot(60°N)$, où l'indice j va de 1 à N et $\varphi_0$ est une constante.

- Le nombre N de rayons lumineux utilisés peut être supérieur ou égal à 3, et de préférence supérieur ou égal à 6

- Lors de ladite étape b), lesdites images peuvent être acquises selon une direction d'observation normale à la surface à caractériser.

- Ladite étape c) peut comporter également la détection automatique de régions de ladite surface diffractante constituées par des points caractérisés par un même dit angle azimutal moyen, lesdites régions étant identifiées avec des grains cristallins.

- Ladite étape c) peut comporter également la détection automatique de contours desdites régions de ladite surface diffractante, lesdits contours étant identifiés avec des joints de grains.

- Ladite étape c) peut comporter également le calcul d'un taux d'ordonnancement de ladite surface diffractante, défini comme la différence entre la proportion des points de ladite surface correspondant à des pixels desdites images identifiés comme appartenant à des grains cristallins, et la proportion des points de ladite surface correspondant à des pixels desdites images identifiés comme appartenant à des joints de grains.

- Ladite surface à caractériser peut être constituée par un assemblage de particules de dimensions nanométriques ou micrométriques sur un substrat.

- Ladite surface à caractériser peut notamment être constituée par un assemblage de particules de dimensions nanométnques ou micrométriques sur un substrat.

Un autre objet de l'invention est l'application d'un tel procédé au suivi d'un procédé de fabrication d'un assemblage de particules de dimensions nanométnques ou micrométriques. Le procédé selon l'invention peut être utilisé pour caractériser l'assemblage déposé sur un substrat, à l'issue du procédé de fabrication, ou bien pour réaliser un suivi en ligne dudit procédé de fabrication, en caractérisant l'assemblage à l'intérieur d'un équipement du type de la figure 1 préalablement à son dépôt.

Encore un autre objet de l'invention est un appareil pour la mise en oeuvre d'un tel procédé comportant :

- une tête optique adaptée pour générer une pluralité de faisceaux lumineux ayant des directions de propagation inclinées d'un même angle $\theta_i$ par rapport à la normale à une surface diffractante à caractériser, et dont les projections sur la surface forment des angles azimutaux $\varphi_i^j$ différents par rapport à une direction de référence ;

- une caméra, présentant un axe optique coïncidant avec ledit axe de symétrie, agencé pour acquérir une image de ladite surface en correspondance de chaque dit faisceau lumineux ; et

- un moyen de traitement numérique des images acquises par ladite caméra pour obtenir au moins une information sur au moins une propriété de ladite surface choisie parmi : sa structure de grains, sa texture et son taux d'ordonnancement ; ledit moyen de traitement numérique étant configuré ou programmé pour déterminer, pour chaque point de ladite surface correspondant à un pixel desdites images, un angle azimutal moyen d'une plage d'angles azimutaux $\varphi_i^j$ pour lesquels ledit point apparait brillant lorsqu'il est observé suivant ladite direction d'acquisition.

Le moyen de traitement numérique peut être notamment un ordinateur conventionnel programmé d'une manière opportune, une carte électronique de traitement numérique des images, voire un circuit numérique dédié.

D'autres caractéristiques, détails et avantages de l'invention ressortiront à la lecture de la description faite en référence aux dessins annexés, dans lesquels

- les figures 4A - 4C illustrent le phénomène de diffraction par une structure pouvant être caractérisée conformément à l'invention ;
- la figure 5 illustre, de manière générale, un appareil de caractérisation d'une structure diffractante selon un mode de réalisation de l'invention ;
- les figures 6A - 6D représentent un premier mode de réalisation d'une tête optique d'un tel appareil ;
- la figure 7 représente un deuxième mode de réalisation d'une tête optique d'un tel appareil ; et
- les figures 8A - 8D illustrent un algorithme de traitement d'images permettant la caractérisation d'une structure diffractante selon un mode de réalisation de l'invention.

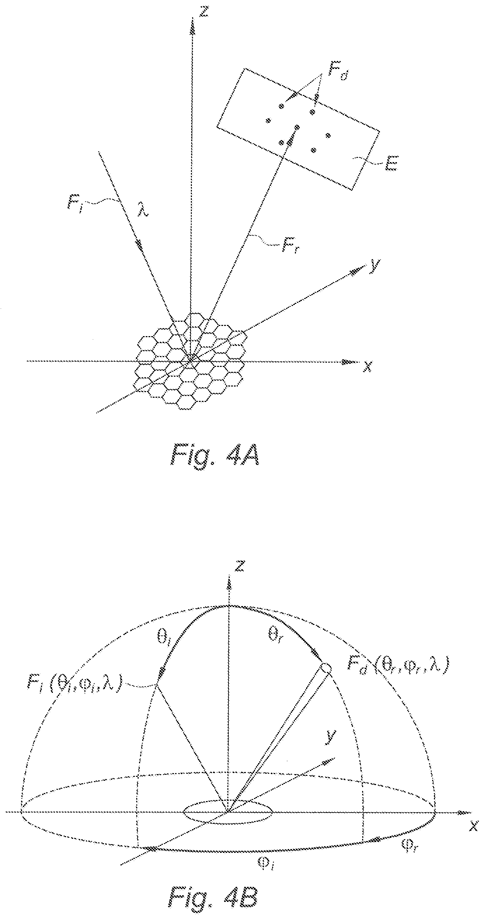

Lorsqu'un faisceau incident lumineux Fi de longueur d'onde $\lambda$ illumine une structure périodique telle qu'un film de particules, le faisceau lumineux est diffracté en plusieurs ordres (faisceaux diffractés Fd) dont le nombre dépend du nombre de périodes que comporte la structure. Dans le cas d'une structure à symétrie hexagonale (cas d'un film de particules en assemblage hexagonal compact), par exemple, la diffraction au premier ordre s'opère dans 6 directions de l'espace formant un motif hexagonal sur un écran E placé à la normale du faisceau réfléchi (voir la figure 4A). Ce motif correspond à la transformée de Fourier de l'image de la structure périodique.

Lorsqu'une structure périodique de ce type est éclairée avec un faisceau incident polychromatique (comportant une pluralité de longueurs d'onde), chaque longueur d'onde est diffractée dans une direction de l'espace qui lui est propre. Les formules suivantes donnent l'orientation des faisceaux diffractés Fd par rapport au faisceau incident Fi :

$$\theta_r = \arcsin\left[\frac{\sqrt{(m\lambda - d\sin\theta_i\cos\varphi_i)^2 + (n\lambda - d\sin\theta_i\sin\varphi_i)^2}}{d}\right]$$

$$\varphi_r = \arctan\left[\frac{-d\sin\theta_i\sin\varphi_i + \lambda n}{-d\sin\theta_i\cos\varphi_i + \lambda m}\right]$$

- où $\lambda$ est la longueur d'onde considérée (nm),
- d le paramètre cristallin, c'est-à-dire la distance entre les centres de deux particules du film (nm)
- $(\theta_i, \varphi_i)$, respectivement, l'inclinaison du faisceau incident par rapport à la normale au film diffractant et son angle azimutal (voir la figure 4B) ;
- $(\theta_r, \varphi_r)$, les angles définissant la direction du faisceau diffracté (voir la figure 4B) ;
- (n,m) des entiers définissant les tâches de diffraction, ordre et position. Les tâches de diffraction sont définies pour l'ordre 1 par (n,m)=(1,1), (-1,-1) (0,1), (0,-1), (1,0), (-1,0) ; pour l'ordre 2 (n,m)= (2,2)... (et ainsi de suite, comme pour les tâches du premier ordre mais en remplaçant les « 1 » par des « 2 »).

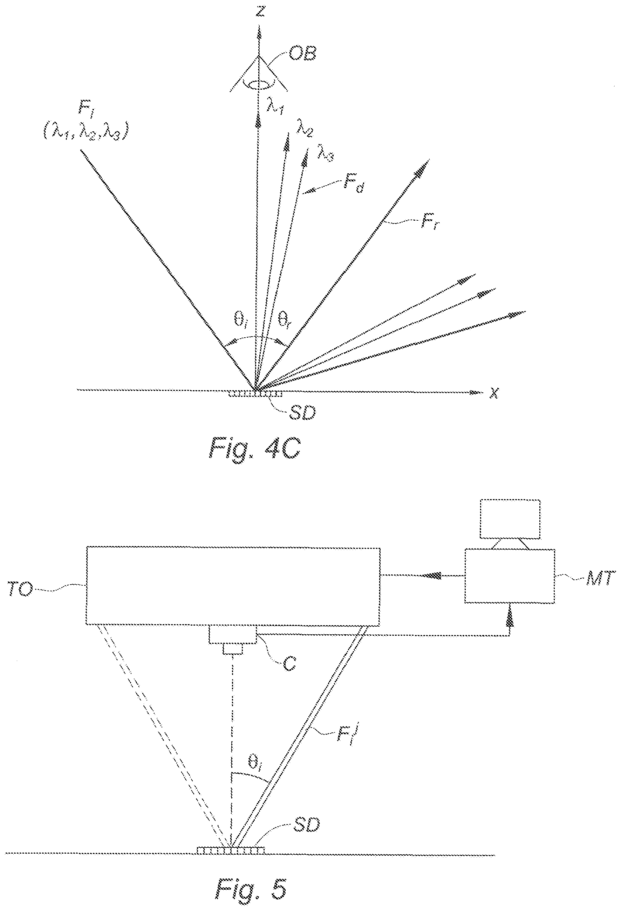

Lorsqu'on éclaire une surface diffractante SD avec un faisceau polychromatique (longueurs d'onde $\lambda_1$, $\lambda_2$, $\lambda_3$...) avec un angle d'incidence $\theta_i$, un observateur OB situé à la normale de la structure voit la longueur d'onde pour laquelle les équations ci-dessus donnent $\theta_i = 0$ ; si aucune des longueurs d'onde d'éclairage ne satisfait cette condition, la structure apparait noire à l'observateur. Cela est illustré sur la figure 4C.

Pour un paramètre cristallin « d » donné, l'angle $\theta_i$ détermine la longueur d'onde (la couleur) du rayonnement détecté par l'observateur OB, tandis que $\varphi_i$ - angle azimutal du faisceau incident par rapport à l'orientation spatiale de la maille cristalline élémentaire de la structure diffractante - détermine l'intensité dudit rayonnement détecté. Ainsi, chaque grain de la structure diffractante apparaitra plus ou moins brillant en fonction de son orientation. Ainsi, l'acquisition de plusieurs images correspondant à des angles azimutaux $\varphi_i^j$ différents permet de caractériser la surface diffractante, en identifiant les grains (information de structure), leur orientation (information de texture) et leur taux d'ordonnancement. Il s'agit là d'un principe à la base de la présente invention.

La figure 5 représente de manière schématique un appareil pour la mise en oeuvre d'un procédé de caractérisation selon l'invention. Cet appareil comporte essentiellement trois éléments :

- une tête optique TO, capable de générer une pluralité de faisceaux lumineux Fi$^j$ présentant une même inclinaison $\theta_i$ par rapport à la normale à la surface diffractante SD à caractériser, mais des angles azimutaux $\varphi_i^j$ différents ;
- une caméra C, observant la surface SD (ou plus précisément sa portion éclairée par les faisceaux lumineux générés par la tête optique) selon une direction d'observation perpendiculaire à ladite surface ; et
- un moyen de traitement des données MT traitant les images acquises par la caméra C pour obtenir les informations de structure, texture et ordonnancement requises, et le cas échéant pour piloter la tête optique TO. Il peut s'agir notamment d'un ordinateur conventionnel programmé de manière opportune, ou bien d'une carte électronique dédiée.

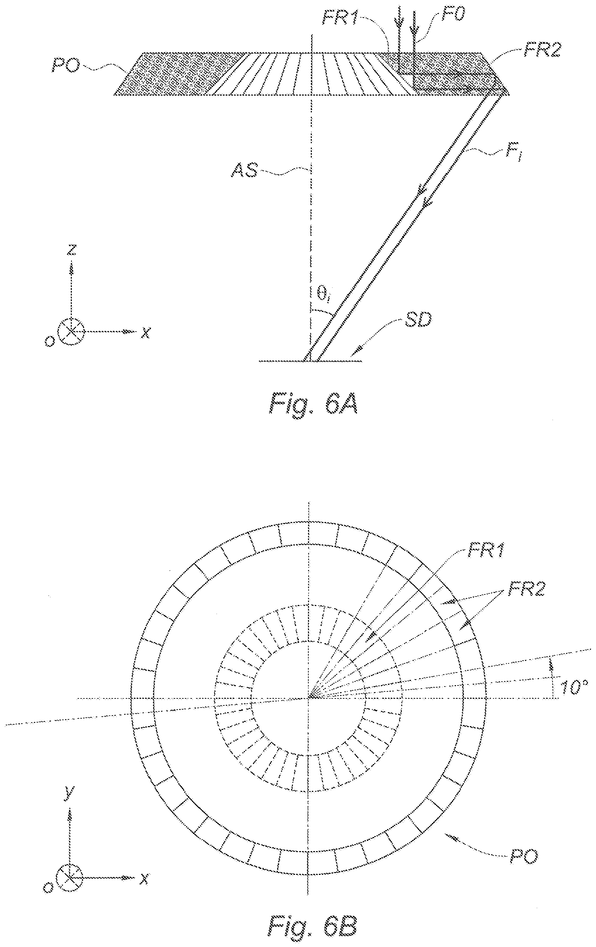

Les figures 6A - 6C illustrent la structure et le fonctionnement d'une tête optique TO, déjà décrite dans la Demande de brevet en France 13/51870 précitée, pouvant être utilisée pour la mise en oeuvre du procédé de l'invention.

L'élément essentiel de cette tête optique est une pièce transparente PO (figure 6A : vue en coupe; figure 6B : vue du haut) présentant un axe de symétrie AS destiné à coïncider avec l'axe optique de la caméra C, et à être donc perpendiculaire à la surface diffractante SD. Cette pièce, réalisée par exemple en verre ou plexiglas ou polycarbonate ou polyméthacrylate de méthyle (PMMA), comporte un premier ensemble de M facettes réfléchissantes FR1 agencées autour de l'axe AS, inclinées de telle sorte que leurs normales forment un angle d'environ 45° par rapport à ce dernier, de manière à constituer une pyramide tronquée. La pièce présente aussi un deuxième ensemble de M facettes réfléchissantes FR2, agencées autour dudit axe AS et dudit premier ensemble ; le deuxième ensemble de facettes peut former la surface latérale de la pièce. Les facettes FR2 sont inclinées de telle sorte que leurs normales forment un angle d'environ 45° par rapport à ce dernier, de manière à constituer une autre pyramide tronquée. En outre, chaque facette FR2 est disposée en regard d'une facette FR1 respective. On considère un faisceau lumineux F0 qui se propage parallèlement à l'axe AS, mais décalé latéralement par rapport audit axe, et qui pénètre dans la pièce PO par sa face supérieure. Ce faisceau est réfléchi par une facette FR1 et se propage dans une direction radiale par rapport à l'axe AS jusqu'à atteindre une facette FR2, qui le réfléchit vers le bas. Le faisceau - indiqué désormais par Fi - sort alors de la face inférieure de la pièce (en subissant une déviation par réfraction), et se propage à un angle $\theta_i$ par rapport à l'axe AS, en direction de la surface diffractante à caractériser SD qui se trouve au-dessous de la pièce PO.

L'inclinaison des facettes FR2 est choisie de telle sorte que l'angle $\theta_i$ prenne la valeur voulue, qui est généralement comprise entre 10° et 80°, de préférence entre 25° et 50°, et peut notamment être de 34°. Pour cela, il ne faut pas oublier de tenir compte de la réfraction du faisceau à la sortie de la pièce P0.

On suppose maintenant de déplacer le faisceau F0 de telle façon que son point d'entrée dans la pièce PO parcourt un cercle centré sur l'axe AS. A chaque fois que la facette FR1 éclairée change, l'angle azimutal du faisceau Fi change à son tour. On considère par exemple le cas où chaque ensemble de la pièce comprend M=36 facettes, de telle sorte que l'angle formé par deux facettes consécutives est de 10° ; dans ces conditions, on pourra obtenir 36 faisceaux Fi présentant des angles azimutaux espacés de pas de 10°.

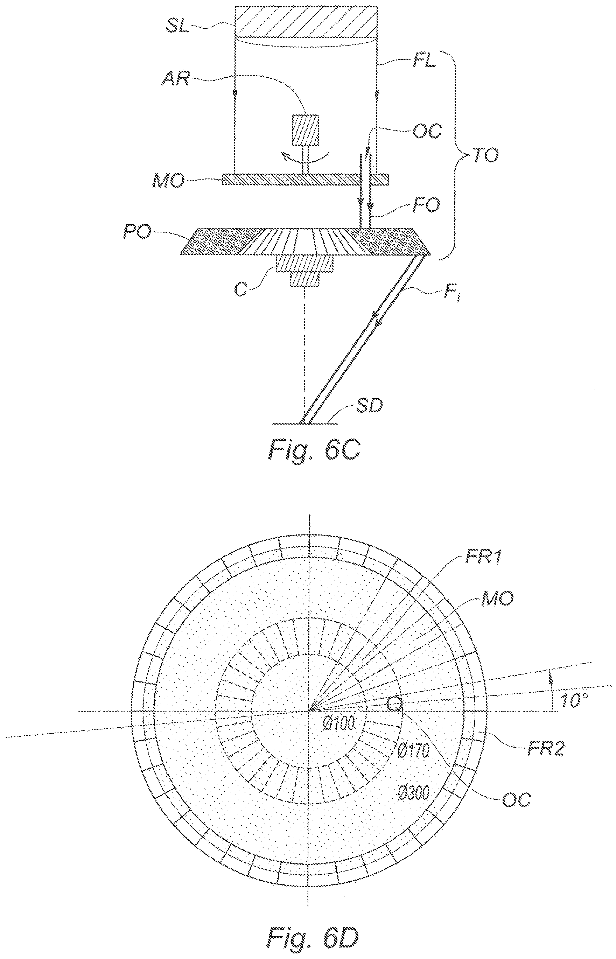

L'éclairage sélectif des facettes de la pièce optique peut être obtenu de plusieurs façons différentes. Une solution particulièrement simple, illustrée sur les figures 6C et 6D, consiste à disposer au-dessus de la pièce optique PO un masque optique MP en forme de disque, présentant une ouverture par exemple circulaire OC à une distance de l'axe AS adaptée pour se trouver à l'aplomb d'une facette FR1. Un moteur AR met le disque en rotation autour de l'axe AS, et une source de lumière SL l'éclaire avec un faisceau lumineux FL collimaté, mais de section suffisamment large, se propageant parallèlement audit axe. La figure 6C montre une vue latérale de la tête optique permettant d'en comprendre le fonctionnement, tandis que la figure 6D est une vue par-dessus de la pièce optique PO et du masque MO.

Le faisceau lumineux FL peut être polychromatique et spatialement incohérent, par exemple être un faisceau de lumière blanche incohérence. Dans ce cas, la source SL peut notamment être une diode électroluminescente. L'utilisation d'une source monochromatique tel qu'un laser peut conduire a des meilleures performances d'analyse, mais l'expérience montre que la lumière blanche conduit à des résultats satisfaisants tout en permettant l'utilisation d'un équipement plus simple et meilleur marché.

La caméra d'acquisition des images C peut être fixée au centre de la surface inférieure de la pièce PO. Il est important que les images soient acquises quand une seule facette FR1 et une seule facette FR2 sont éclairée, et pas pendant les transitions.

Une surface diffractante à structure hexagonale doit, pour pouvoir être caractérisée de manière satisfaisante, être éclairée sous plusieurs angles d'incidence sur une période de 60°. Il a été vérifié qu'il est suffisant d'acquérir 6 images avec six faisceaux lumineux ayant des angles azimutaux $\varphi_i^j$=j·10°=10°, 20°, 30°, 40°, 50°, 60° ; plus généralement on pourra utiliser N faisceaux avec $\theta_i^j$=$\varphi_0$+j·(60°/N), $\varphi_0$ étant une constante. N doit en général être supérieur ou égal à 3, et de préférence supérieur ou égal à 6. En règle générale, plus la valeur de N est élevée, plus la caractérisation de la surface est précise, mais plus le temps de traitement et d'acquisition est long. D'une manière générale, il ne semble donc pas avantageux de choisir N supérieur à 12, voire à 24.

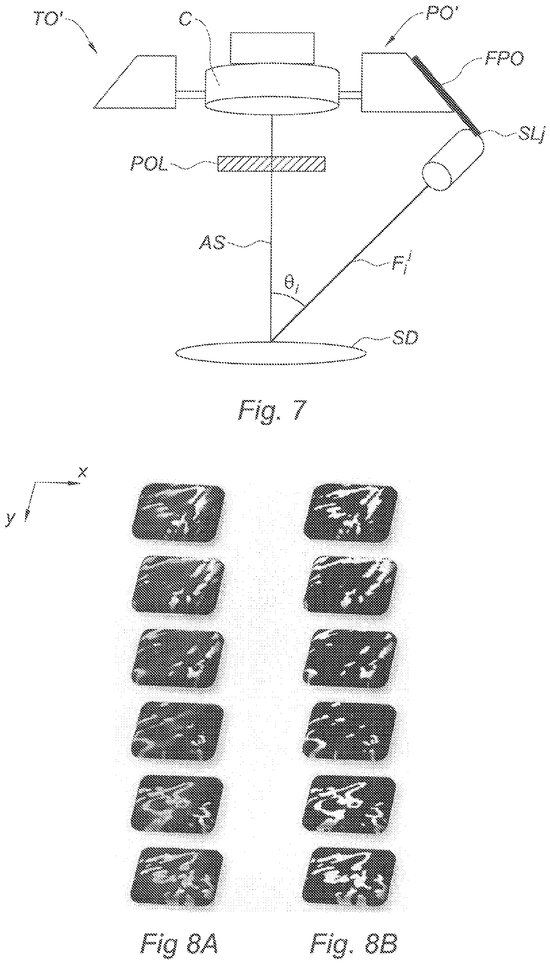

La figure 7 montre une vue en section d'une tête optique TO' présentant une structure alternative. Cette tête optique TO' comporte une pièce PO', transparente ou non et par exemple réalisée en aluminium, présentant une forme de révolution (par exemple en anneau) facettée en sa périphérie, dont les facettes FPO portent N sources de lumière $SL_j$ - par exemple des diodes électroluminescentes, et notamment des diodes électroluminescentes blanches - disposées régulièrement autour de l'axe de révolution et orientées de manière oblique vers ledit axe de révolution. Les sources de lumière $SL_j$ (j=1 - N) génèrent directement les N (typiquement N=6) faisceaux lumineux incidents $Fi^j$ ayant des angles azimutaux $\varphi_i^j$, comme dans le cas de la tête optique TO décrite ci-dessus. La caméra d'acquisition C est agencée comme dans le cas de ladite tête optique TO.

La tête optique de la figure 7 peut également être utilisée pour la mise en oeuvre du procédé décrit dans la Demande de brevet en France 13/51870 précitée.

Quel que soit le mode de réalisation de la tête optique, et quel que soit le procédé de caractérisation considéré, il est avantageux de prévoir un polariseur linéaire POL devant la caméra C pour filtrer la lumière parasite et éviter la saturation du capteur de ladite caméra. En effet, la lumière diffractée est partiellement polarisée, tandis que celle diffusée ne l'est pas ; un polariseur linéaire permet donc d'améliorer le rapport (intensité de la lumière diffractée)/(intensité de la lumière diffusée).

En fonctionnement, c'est-à-dire lorsque l'éclairement tourne autour de la zone de la surface considérée, le moyen de traitement traite en permanence au moins 6 images prises de façon consécutive et stockées dans une pile de type FIFO (de l'anglais « First In, First Out », c'est-à-dire « premier entrant - premier sortant »). Autrement dit, une fois qu'un bloc de 6 images est analysé, l'image n°1 est écrasée, les numéros des images restantes sont décrémentés de la valeur 1 et une nouvelle image est considérée en prenant le numéro 6 dans la file d'image. L'analyse s'opère chaque fois que la pile est mise à jour.

La figure 8A montre les six images stockées dans la pile, correspondant à des angles azimutaux d'éclairage $\varphi_i^j = j \cdot 10° = 10°$, 20°, 30°, 40°, 50°, 60°. Ces images sont représentées ici en nuances de gris, mais elles peuvent être en couleurs et montrer un effet d'iridescence.

La première étape du traitement consiste à opérer un seuillage des images dans la pile afin d'obtenir une image en noir et blanc, les pixels blancs correspondant à des points de la surface qui apparaissent brillants (intensité lumineuse diffractée « élevée », c'est-à-dire supérieure à un seuil) et les pixels noirs correspondant à des points qui apparaissent sombres (intensité lumineuse « faible », inférieure audit seuil) : voir la figure 8B.

La deuxième étape du traitement consiste à construire, pour chaque pixel desdites images (ou, plus exactement, pour chaque point de la surface correspondant à un pixel desdites images) un vecteur binaire de dimension N. Le j-ème élément de ce vecteur vaut « 1 » si le pixel est blanc lorsque la surface est éclairée selon l'angle azimutal $\varphi_i^j$, « 0 » dans le cas contraire. Par exemple, si le vecteur associé à un pixel de coordonnées $(x_0, y_0)$ est : [0 1 1 1 0 0], cela signifie que ce pixel est blanc pour un éclairage d'angle azimutal égal à 20°, 30°, 40° et noir dans les autres cas.

La troisième étape consiste à déterminer la direction d'éclairage centrale ou moyenne de la plage de directions pour lesquelles le pixel est blanc. Cela correspond à considérer que le vecteur associé a une structure circulaire (le premier élément est considéré comme suivant immédiatement le dernier), à identifier un bloc d'éléments successifs présentant la valeur 1 (deuxième, troisième et quatrième élément dans le cas du vecteur [0 1 1 1 0 0]) et à déterminer un élément « central » dudit bloc (le troisième élément, correspondant à une direction azimutale de 30° dans l'exemple considéré). Si le bloc de « uns » comporte un nombre pair d'éléments, il y a deux éléments pouvant être considérés « centraux » ; on choisit alors l'un des deux, de manière arbitraire mais cohérente.

Un algorithme pour déterminer de manière automatique la direction d'éclairage centrale ou moyenne pour laquelle le pixel est blanc est le suivant :

- Le vecteur est dupliqué : on passe ainsi du vecteur à N=6 éléments [0 1 1 1 0 0] à un vecteur à 2N=12 composantes [0 1 1 1 0 0 0 1 1 1 0 0] ;

- Chaque élément du vecteur dupliqué est multiplié par un entier indicatif de sa position (de manière équivalente, le vecteur dupliqué est multiplié élément par élément par le vecteur [1 2 3 ... 12]) ; on obtient ainsi le vecteur d'entiers [0 2 3 4 0 0 0 8 9 10 0 0] ;

- On considère ensuite les N=6 successions de N=6 éléments contenus dans le vecteur ainsi obtenu : [0 2 3 4 0 0] ; [2 3 4 0 0 0] ; [3 4 0 0 0 8] ; [4 0 0 0 8 9] ; [0 0 0 8 9 10] ; [0 0 8 9 10 0] et [0 8 9 10 0 0] ;

- On associe à chacune desdites successions la somme de ses éléments divisée par le nombre d'éléments non nuls, le tout *modulo* N : [0 2 3 4 0 0] → (2+3+4)/3 *mod* 6 = 3 ; [2 3 4 0 0 0] → (2+3+4)/3 *mod* 6 = 3 ; [3 4 0 0 0 8] → (3+4+8)/3 *mod* 6 = 5 ; [4 0 0 0 8 9] → (4+8+9)/13 *mod* 6 = 7 *mod* 6 = 1 ; [0 0 0 8 9 10] → (8+9+10)/3 *mod* 6 = 9 *mod* 6 = 3 ; [0 0 8 9 10 0] → (8+9+10)/3 *mod* 6 = 3 et [0 8 9 10 0 0] → (8+9+10)/3 *mod* 6= 3 ; on trouve donc une fois la valeur 1, quatre fois la valeur 3 et une fois la valeur 5 ;

- On retient la valeur qui présente la fréquence la plus élevée (ici : la valeur 3), qui indique la direction d'éclairage centrale ou moyenne recherchée - ici $\varphi_i^j|_{j=3} = 30°$. Si deux valeurs présentent une même fréquence on choisit de manière arbitraire (mais consistante d'un pixel à l'autre) la plus élevée ou la moins élevée. Par exemple, dans le cas d'un vecteur [0 1 1 1 1 0] on peut considérer que la direction d'éclairage centrale ou moyenne vaut 30°, 40° ou bien 35°.

Ainsi, à chaque pixel de l'image est associée une valeur numérique V comprise entre 1 et 7 (plus généralement : entre 1 et N+1) ; pour V compris entre 1 et 6, cette valeur correspond à l'indice « j » de la direction d'éclairage centrale ou moyenne : $\varphi_i^j|_{j=v}$ ; le cas V=7 identifie le cas où le pixel est toujours noir ou toujours blanc. Ce dernier cas peut correspondre à trois situations distinctes : soit le pixel de la caméra est défectueux ; soit le pixel apparait toujours noir car il correspond à une région « vide », qui ne réfléchit pas la lumière ; soit le pixel apparait toujours blanc car il correspond à une région amorphe qui diffuse la lumière au lieu de la diffracter. D'une manière générale on parlera de « pixel en défaut ».

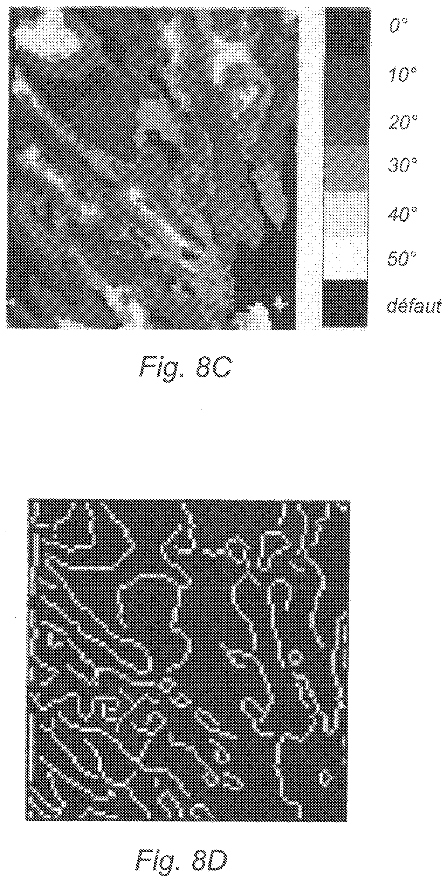

La figure 8C est une image en « fausses couleurs » de la surface dans laquelle chaque nuance de gris correspond à une valeur différente du paramètre V. Cette image contient toute l'information sur la texture de la surface. On peut lui appliquer un algorithme de détection des contours, connu en soi, pour déterminer la structure de la surfaces. Cela est illustré par la figure 8D, où les zones noires correspondent aux grains cristallins (quelle que soit leur orientation) ou aux régions « en défaut » (amorphes ou vides), et les lignes blanches aux joints de grains.

Pour déterminer le taux d'ordonnancement on procède de la façon suivante :

- On calcule T1, défini comme le rapport entre le nombre de pixels correspondant à une orientation cristalline définie (pixels noirs sur la figure 8D, à l'exclusion des pixels « en défaut », noirs sur la figure 8C) et le nombre total de pixels de l'image ;
- On calcule T2, défini comme le complément à un du rapport entre le nombre de pixels correspondant à un joint de grain (pixels blancs sur la figure 8D, à l'exclusion des pixels « en défaut ») et le nombre de pixels correspondant à une orientation cristalline définie (pixels noirs sur la figure 8D, toujours à l'exclusion des pixels « en défaut ») ;
- Le taux d'ordonnancement est donné par le produit de T1 et T2 : ORD=T1*T2= (nombre de pixels appartenant à une orientation - nombre de pixels correspondant à un joint de grain)/nombre total de pixels.

D'une manière conventionnelle, des étapes de traitement d'image visant à améliorer ou optimiser la qualité des images pourront être associées au protocole décrit précédemment. Ces étapes viseront par exemple à réduire la dérive d'éclairement pour fiabiliser l'analyse.

Plusieurs variantes du protocole peuvent être envisagées. Ces variantes peuvent concerner les conditions d'éclairage de la surface (utilisation d'un rayonnement mono- ou polychromatique, spatialement cohérent ou incohérent...) et/ou le traitement des données acquises (par exemple, d'autres algorithmes que celui décrit plus haut peuvent être utilisés pour déterminer la direction d'éclairage « centrale »).

Le procédé de l'invention convient particulièrement au suivi en temps réel d'un processus de fabrication d'assemblages réguliers de nano- et microparticules tel que celui décrit par le document WO2012113745. En effet, la tête optique peut être facilement intégrée à un appareil de mise en oeuvre d'un tel procédé ; en outre, des surfaces diffractantes suffisamment grandes (1 cm$^2$ ou plus) peuvent être caractérisées. Cependant, il ne s'agit pas là d'une limitation, et l'invention peut convenir à de nombreuses autres applications.

**Revendications**

1. Procédé de caractérisation d'une surface diffractante (SD) présentant une structure en grains, comportant les étapes consistant à :

   a) éclairer successivement ladite surface avec N>1 faisceaux lumineux (Fi$^j$) ayant des directions de propagation inclinées d'un même angle $\theta_i$ par rapport à la normale à la surface et dont les projections sur la surface forment des angles azimutaux $\varphi_i^j$ différents par rapport à une direction de référence ;
   b) acquérir une image de ladite surface en correspondance de chaque dit faisceau lumineux suivant une même direction d'acquisition ; et
   c) traiter numériquement lesdites images pour obtenir au moins une information sur au moins une propriété de ladite surface choisie parmi : sa structure de grains, sa texture et son taux d'ordonnancement ; ladite étape c comprenant la détermination, pour chaque point de ladite surface correspondant à un pixel desdites images, d'un angle azimutal moyen d'une plage d'angles azimutaux $\varphi_i^j$ pour lesquels ledit point apparait brillant lorsqu'il est observé suivant ladite direction d'acquisition.

2. Procédé selon la revendication 1 dans lequel ladite étape c) comprend, pour chaque point de ladite surface correspondant à un pixel desdites images, les sous-étapes consistant à:

> c1) construire un vecteur binaire à N éléments, associés chacun à un dit faisceau lumineux, chaque élément de ce vecteur étant représentatif de l'intensité lumineuse dudit pixel lorsque la surface est éclairée par le faisceau lumineux correspondant, l'élément prenant une première valeur binaire si ladite intensité est inférieure à un seuil et une deuxième valeur binaire si elle est supérieure audit seuil ; et
> c2) déterminer ledit angle azimutal moyen à partir dudit vecteur.

3. Procédé selon la revendication 2 dans lequel ladite sous-étape c2) comprend l'identification, dans ledit vecteur, d'un bloc d'éléments contigus présentant ladite deuxième valeur binaire et la détermination d'un élément central dudit bloc, ledit angle azimutal moyen étant celui du faisceau lumineux associé audit élément central.

4. Procédé selon l'une des revendications précédentes dans lequel chaque dit grain présente une périodicité bidimensionnelle avec symétrie hexagonale et dans lequel lesdits angles azimutaux $\varphi_i^j$ sont donnés par : $\varphi_i^j = \varphi_0 + j \cdot (60°/N)$, où l'indice j va de 1 à N et $\varphi_0$ est une constante.

5. Procédé selon l'une des revendications précédentes dans lequel le nombre N de rayons lumineux utilisés est supérieur ou égal à 3, et de préférence supérieur ou égal à 6

6. Procédé selon l'une des revendications précédentes dans lequel, lors de ladite étape b), lesdites images sont acquises selon une direction d'observation normale à la surface à caractériser.

7. Procédé selon l'une des revendications précédentes dans lequel ladite étape c) comporte également la détection automatique de régions de ladite surface diffractante constituées par des points **caractérisés par** un même dit angle azimutal moyen, lesdites régions étant identifiées avec des grains cristallins.

8. Procédé selon la revendication 7 dans lequel ladite étape c) comporte également la détection automatique de contours desdites régions de ladite surface diffractante, lesdits contours étant identifiés avec des joints de grains.

9. Procédé selon l'une des revendication 6 à 8 dans lequel ladite étape c) comporte également le calcul d'un taux d'ordonnancement de ladite surface diffractante, défini comme la différence entre la proportion des points de ladite surface correspondant à des pixels desdites images identifiés comme appartenant à des grains cristallins, et la proportion des points de ladite surface correspondant à des pixels desdites images identifiés comme appartenant à des joints de grains.

10. Procédé selon l'une des revendications précédentes, dans lequel ladite surface à caractériser est constituée par un assemblage de particules de dimensions nanométriques ou micrométriques sur un substrat.

11. Utilisation d'un procédé selon la revendication 10 pour réaliser un suivi d'un procédé de fabrication d'un assemblage de particules de dimensions nanométriques ou micrométriques sur un substrat.

12. Appareil pour la mise en oeuvre d'un procédé selon l'une des revendications 1 à 10 comportant :

> - une tête optique (TO, TO'), comprenant une pièce transparente(PO, PO') présentant un axe de symétrie (AS), adaptée pour générer une pluralité de faisceaux lumineux (Fi$^j$) ayant des directions de propagation inclinées d'un même angle $\theta_i$ par rapport à la normale à une surface diffractante à caractériser, et dont les projections sur la surface forment des angles azimutaux $\varphi_i^j$ différents par rapport à une direction de référence ;
> - une caméra (C), présentant un axe optique coïncidant avec ledit axe de symétrie, agencé pour acquérir une image de ladite surface en correspondance de chaque dit faisceau lumineux ; et
> - un moyen de traitement numérique (MT) des images acquises par ladite caméra pour obtenir au moins une information sur au moins une propriété de ladite surface choisie parmi : sa structure de grains, sa texture et son taux d'ordonnancement ; ledit moyen de traitement numérique étant configuré ou programmé pour déterminer, pour chaque point de ladite surface correspondant à un pixel desdites images, un angle azimutal moyen d'une plage d'angles azimutaux $\varphi_i^j$ pour lesquels ledit point apparait brillant lorsqu'il est observé suivant ladite direction d'acquisition.

**Patentansprüche**

1. Verfahren zur Charakterisierung einer lichtbrechenden Oberfläche (SD), die eine Körnerstruktur aufweist, umfassend die folgenden Schritte:

   a) aufeinanderfolgendes Beleuchten der Oberfläche mit N>1 Lichtstrahlen (Fi$^j$) mit Einfallsrichtungen, die in einem selben Winkel $\theta_i$ in Bezug zur Normalen auf die Oberfläche geneigt sind und deren Projektionen auf die Oberfläche unterschiedliche Azimutwinkel $\varphi_i^j$ in Bezug zu einer Referenzrichtung bilden;
   b) Aufnehmen eines Bildes der Oberfläche in Übereinstimmung mit jedem Lichtstrahl gemäß einer selben Aufnahmerichtung; und
   c) digitales Verarbeiten der Bilder, um mindestens eine Information über mindestens eine Eigenschaft der Oberfläche, ausgewählt aus: ihrer Körnerstruktur, ihrer Textur und ihres Organisationsgrads, zu erhalten;

   wobei Schritt c die Bestimmung, für jeden Punkt der Oberfläche, der einem Pixel der Bilder entspricht, eines mittleren Azimutwinkels eines Bereichs von Azimutwinkeln $\varphi_i^j$ umfasst, für die der Punkt glänzend erscheint, wenn er gemäß der Aufnahmerichtung beobachtet wird.

2. Verfahren nach Anspruch 1, wobei Schritt c) für jeden Punkt der Oberfläche, der einem Pixel der Bilder entspricht, die folgenden Unterschritte umfasst:

   c1) Konstruieren eines binären Vektors mit N Elementen, die jeweils einem Lichtstrahl zugeordnet sind, wobei jedes Element dieses Vektors für die Lichtintensität des Pixels repräsentativ ist, wenn die Oberfläche durch den entsprechenden Lichtstrahl beleuchtet wird, wobei das Element einen ersten binären Wert annimmt, wenn die Intensität unter einem Grenzwert liegt, und einen zweiten binären Wert, wenn sie über dem Grenzwert liegt; und
   c2) Bestimmen des mittleren Azimutwinkels, ausgehend von dem Vektor.

3. Verfahren nach Anspruch 2, wobei der Unterschritt c2) die Identifizierung, in dem Vektor, eines Blocks angrenzender Elemente umfasst, die den zweiten binären Wert aufweisen, und die Bestimmung eines zentralen Elements des Blocks, wobei der mittlere Azimutwinkel derjenige des Lichtstrahls ist, der dem zentralen Element zugeordnet ist.

4. Verfahren nach einem der vorangehenden Ansprüche, wobei jedes Korn eine zweidimensionale Periodizität mit sechseckiger Symmetrie aufweist und bei dem die Azimutwinkel $\varphi_i^j$ gegeben sind von: $\varphi_i^j=\varphi_0+j\cdot(60°/N)$, wobei der Index j von 1 bis N ist und $\varphi_0$ eine Konstante ist.

5. Verfahren nach einem der vorangehenden Ansprüche, wobei die Anzahl N verwendeter Lichtstrahlen größer oder gleich 3 und vorzugsweise größer oder gleich 6 ist.

6. Verfahren nach einem der vorangehenden Ansprüche, wobei bei Schritt b) die Bilder gemäß einer zur charakterisierenden Oberfläche normalen Beobachtungsrichtung aufgenommen werden.

7. Verfahren nach einem der vorangehenden Ansprüche, wobei Schritt c) ebenfalls die automatische Detektion von Regionen der ablenkenden Oberfläche aufweist, gebildet von Punkten, die von einem selben mittleren Azimutwinkel charakterisiert sind, wobei die Regionen mit kristallinen Körnern identifiziert sind.

8. Verfahren nach Anspruch 7, wobei Schritt c) ebenfalls die automatische Detektion von Konturen der Regionen der ablenkenden Oberfläche aufweist, wobei die Konturen mit Kornzwischenräumen identifiziert sind.

9. Verfahren nach einem der Ansprüche 6 bis 8, wobei Schritt c) ebenfalls die Berechnung eines Organisationsgrads der ablenkenden Oberfläche aufweist, definiert als die Differenz zwischen dem Anteil der Punkte der Oberfläche, der Pixeln der Bilder entspricht, die als kristallinen Körnern zugehörig identifiziert wurden, und dem Anteil der Punkte der Oberfläche, der Pixeln der Bilder entspricht, die als Kornzwischenräumen zugehörig identifiziert wurden.

10. Verfahren nach einem der vorangehenden Ansprüche, wobei die zu charakterisierenden Oberfläche durch eine Verbindung von Partikeln nanometrischer oder mikrometrischer Abmessungen auf einem Substrat gebildet ist.

11. Verwendung eines Verfahrens nach Anspruch 10 zur Durchführung einer Nachverfolgung eines Herstellungsverfahrens einer Verbindung von Partikeln nanometrischer oder mikrometrischer Abmessungen auf einem Substrat.

12. Gerät zur Umsetzung eines Verfahrens nach einem der Ansprüche 1 bis 10, aufweisend:

- einen optischen Kopf (TO, TO'), umfassend ein transparentes Teil (PO, PO'), aufweisend eine Symmetrieachse (AS), ausgebildet, um eine Vielzahl von Lichtstrahlen (Fi$^j$) mit Einfallsrichtungen, die in einem selben Winkel $\theta_i$ in Bezug zur Normalen auf einer zu charakterisierenden ablenkenden Oberfläche geneigt sind und deren Projektionen auf die Oberfläche unterschiedliche Azimutwinkel $\varphi_i^j$ in Bezug zu einer Referenzrichtung bilden;
- eine Kamera (C), aufweisend eine optische Achse, die mit der Symmetrieachse zusammenfällt, die ausgebildet ist, um ein Bild von der Oberfläche in Übereinstimmung mit jedem Lichtstrahl aufzunehmen; und
- ein digitales Verarbeitungsmittel (MT) der von der Kamera aufgenommenen Bilder, um mindestens eine Information über mindestens eine Eigenschaft der Oberfläche, ausgewählt aus: ihrer Körnerstruktur, ihrer Textur und ihres Organisationsgrads, zu erhalten; wobei das digitale Verarbeitungsmittel konfiguriert oder programmiert ist, um für jeden Punkt der Oberfläche, der einem Pixel der Bilder entspricht, einen mittleren Azimutwinkel eines Bereichs von Azimutwinkeln $\varphi_i^j$ zu bestimmen, für die der Punkt glänzend erscheint, wenn er gemäß der Aufnahmerichtung beobachtet wird.

**Claims**

1. A method for characterizing a diffracting surface (SD) having a grain structure, comprising steps consisting in:

   a) illuminating in succession said surface with N>1 light beams ($F_i^j$) having propagation directions inclined at the same angle $\theta_i$ to the normal to the surface and the projections of which onto the surface make different azimuthal angles $\varphi_i^j$ to a reference direction;
   b) acquiring an image of said surface in correspondence with each of said light beams in a given acquisition direction; and
   c) digitally processing said images to obtain at least one piece of information on at least one property of said surface, chosen from: its grain structure, its texture and its degree of order;

   said step c comprising determining, for each point of said surface corresponding to a pixel of said images, an average azimuthal angle of a range of azimuthal angles $\varphi_i^j$ for which said point appears bright when it is observed in said acquisition direction.

2. The method as claimed in claim 1, in which said step c) comprises, for each point of said surface corresponding to a pixel of said images, substeps consisting in:

   c1) constructing a binary vector containing N elements each associated with one of said light beams, each element of this vector being representative of the light intensity of said pixel when the surface is illuminated by the corresponding light beam, the element taking a first binary value if said intensity is lower than a threshold and a second binary value if it is higher than said threshold; and
   c2) determining said average azimuthal angle from said vector.

3. The method as claimed in claim 2, in which said substep c2) comprises identifying, in said vector, a block of contiguous elements having said second binary value and determining a central element of said block, said average azimuthal angle being that of the light beam associated with said central element.

4. The method as claimed in one of the preceding claims, in which each of said grains has a two-dimensional periodicity with hexagonal symmetry and in which said azimuthal angles $\varphi_i^j$ are given by: $\varphi_i^j = \varphi_0 + j \cdot (60°/N)$, where the index j ranges from 1 to N and $\varphi_0$ is a constant.

5. The method as claimed in one of the preceding claims, in which the number N of light rays used is higher than or equal to 3, and preferably higher than or equal to 6.

6. The method as claimed in one of the preceding claims, in which, in said step b), said images are acquired in an observation direction normal to the surface to be characterized.

7. The method as claimed in one of the preceding claims, in which said step c) also comprises automatically detecting those regions of said diffracting surface which are formed by points **characterized by** the same said average azimuthal angle, said regions being identified with crystal grains.

8. The method as claimed in claim 7, in which said step c) also comprises automatically detecting outlines of said regions of said diffracting surface, said outlines being identified with grain boundaries.

9. The method as claimed in one of claims 6 to 8, in which said step c) also comprises calculating a degree of order of said diffracting surface, said degree of order being defined as the difference between the proportion of points of said surface corresponding to pixels of said images identified as belonging to crystal grains, and the proportion of points of said surface corresponding to pixels of said images identified as belonging to grain boundaries.

10. The method as claimed in one of the preceding claims, in which said surface to be characterized is formed by an assembly of particles of nanoscale or micron-size dimensions on a substrate.

11. Use of a method as claimed in claim 10 to the monitoring of a process for manufacturing an assembly of particles of nanoscale or micron-size dimensions on a substrate.

12. An apparatus for implementing a method as claimed in one of claims 1 to 10, comprising:

- an optical head (TO, TO') comprising a transparent part (PO, PO') presenting an axis of symmetry (AS) suitable for generating a plurality of light beams ($F_i^j$) having propagation directions inclined at the same angle $\theta_i$ to the normal to a diffracting surface to be characterized, and the projections of which onto the surface make different azimuthal angles $\varphi_i^j$ to a reference direction;
- a camera (C), having an optical axis coincident with said axis of symmetry, arranged to acquire an image of said surface in correspondence with each of said light beams; and
- a means (MT) for digitally processing the images acquired by said camera in order to obtain at least one piece of information on at least one property of said surface, chosen from: its grain structure, its texture and its degree of order; said digitally processing means being configured or programmed to determine, for each point of said surface corresponding to a pixel of said images, an average azimuthal angle of a range of azimuthal angles $\varphi_i^j$ for which said point appears bright when it is observed in said acquisition direction.

SD

SC

NP

SF

*Fig. 1*

FP

CL

ZT

PC

*Fig. 2*

G1

F

G2

*Fig. 3*

Y

X

*Fig. 4A*

*Fig. 4B*

*Fig. 4C*

*Fig. 5*

*Fig. 6A*

*Fig. 6B*

Fig. 6C

Fig. 6D

*Fig. 7*

*Fig 8A*       *Fig. 8B*

*Fig. 8C*

*Fig. 8D*

## RÉFÉRENCES CITÉES DANS LA DESCRIPTION

**Documents brevets cités dans la description**

- US 5576543 A
- WO 2012113745 A

- FR 1351870